# EUROPÄISCHE PATENTANMELDUNG

(11) **EP 4 322 391 A1**
(43) Veröffentlichungstag der Anmeldung: **14.02.2024**
(21) Anmeldenummer: 22189188.0
(22) Anmeldetag: 08.08.2022
(51) Int. Cl.: H02P 3/18, B25F 1/00

(54) **BETRIEBSVERFAHREN FÜR EINEN BÜRSTENLOSEN GLEICHSTROMMOTOR EINER ELEKTRISCHEN WERKZEUGMASCHINE**

(71) Anmelder: Hilti Aktiengesellschaft, 9494 Schaan (LI)
(72) Erfinder: Scherbaum, Markus, 86853 Gennach (DE); Freischle, Justus, 86899 Landsberg (DE)
(74) Vertreter: Hilti Aktiengesellschaft Corporate Intellectual Property

(57) **Zusammenfassung**

Verfahren zum Betreiben einer Antriebseinheit einer Werkzeugmaschine, wobei die Antriebseinheit einen bürstenlosen Gleichstrommotor und einen dem Gleichstrommotor vorgeschalteten Zwischenkreis aufweist, wobei der Gleichstrommotor in einem Arbeitsmodus durch einen Drehzahlregler angesteuert und mit einer Nenndrehzahl betrieben wird, und wobei das Verfahren einen Bremsmodus aufweist, in dem der Gleichstrommotor auf eine Bremsdrehzahl, die geringer als die Nenndrehzahl ist, abgebremst wird, wobei der Gleichstrommotor im Bremsmodus mit einer Führungsgröße angesteuert wird, die auf einer Zwischenkreisspannung des Zwischenkreises basiert.

## Beschreibung

Die vorliegende Erfindung betrifft ein Verfahren zum Betreiben einer Antriebseinheit einer Werkzeugmaschine, wobei die Antriebseinheit einen bürstenlosen Gleichstrommotor (BLDC-Motor) und einen dem BLDC-Motor vorgeschalteten Zwischenkreis aufweist. Der BLDC-Motor wird in einem Arbeitsmodus durch einen Drehzahlregler angesteuert und mit einer Nenndrehzahl betrieben. Das Verfahren weist weiterhin einen Bremsmodus auf, in dem der BLDC-Motor auf eine Bremsdrehzahl, die geringer als die Nenndrehzahl ist, abgebremst wird.

Solche Verfahren sind grundsätzlich aus dem Stand der Technik bekannt. Um einen BLDC-Motor schnell auf Stillstand abzubremsen, muss die im BLDC-Motor und am angetriebenen mechanischen Gesamtsystem gespeicherte Rotationsenergie entnommen bzw. umgewandelt werden. Eine Rückspeisung der Rotationsenergie in die elektrische Spannungsquelle ist technisch oft gar nicht möglich oder die Rückspeiseenergie ist in Momentanleistung und Zeitdauer limitiert, sodass eine typischerweise geforderte schnelle Bremszeit nicht erreicht werden kann.

Beim sogenannten Kurzschlussbremsen wird der BLDC-Motor an seinen Klemmen kurzgeschlossen. Dies kann dadurch erreicht werden, wenn alle Low-Side-Leistungshalbleiter des Motorinverters gleichzeitig eingeschaltet werden. Es bildet sich ein anfänglich höherer Anfangskurzschlussstrom, welcher auf einen Dauerkurzschlussstrom abklingt. Der Kurzschlussstrom erzeugt ein Bremsmoment im Motor. Ein weiterer Bremsmodus des Standes der Technik kann mittels Brems-Chopper mit Bremswiderstand erfolgen. Hierbei wird der BLDC-Motor geregelt gebremst und dabei zum Generator. Die abgegebene Energie wird in den Zwischenkreis rückgespeist und lässt dabei die Zwischenkreisspannung ansteigen. Der Brems-Chopper mit Bremswiderstand schaltet einen Widerstand periodisch über einen Leistungshalbleiterschalter an den Zwischenkreis, um so die Energie im Bremswiderstand in Wärme umzusetzen.

Es ist Aufgabe der vorliegenden Erfindung ein Verfahren zum ein Betreiben einer Antriebseinheit einer Werkzeugmaschine anzugeben, dass die Grundlage für einen einfachen und schnellen Bremsmodus zu schaffen.

Die Aufgabe wird dadurch gelöst, dass der BLDC-Motor im Bremsmodus mit einer Führungsgröße angesteuert wird, die auf einer Zwischenkreisspannung des Zwischenkreises basiert. Es hat sich als vorteilhaft herausgestellt, wenn die Ansteuerung des BLDC-Motors im Bremsmodus mit der Führungsgröße derart erfolgt, dass eine beim Bremsen des BLDC-Motors in den Zwischenkreis rückgespeiste Generatorleistung gleich einer im BLDC-Motor umgesetzten ohmschen Verlustleistung ist.

Die Erfindung schließt die Erkenntnis ein, dass beim eingangs erwähnten Kurzschlussbremsen typischerweise kein Einfluss auf das Bremsmoment bzw. die Bremszeit genommen werden kann. Die Höhe des Kurzschlussstroms wird insbesondere nur durch Motorparameter bestimmt. Auch muss die Elektronik den zu Beginn höheren Anfangskurzschlussstrom führen können. Die aus dem Stand der Technik bekannte Lösung basierend auf einem Brems-Chopper mit Bremswiderstand hat zwar mehr Freiheitsgrade in Bezug auf das Erreichen eines gewünschten Bremsmoments bzw. Bremszeit. Allerdings sind hier zusätzliche Hardwarekomponenten (MOSFET/IGBT, Gatetreiber, ein diskreter Bremswiderstand, Anschlusslitzen) erforderlich, die mehr Bauraum benötigen und zusätzliche Kosten verursachen. Insbesondere der Bremswiderstand muss für hohe Pulsleistungen spezifiziert sein und trägt maßgeblich zu Bauraum und Kosten bei.

In Abkehr dazu liegt dem erfindungsgemäßen Verfahren die Idee zugrunde, im Bremsmodus die Bremsenergie als ohmsche Verluste im BLDC-Motor selbst umzusetzen.

Der wesentliche Vorteil der Erfindung ist, dass ein schneller Bremsvorgang unter bestmöglicher Ausnutzung der Leistungselektronik/Inverters ohne Zusatzkomponenten begünstigt wird. Das gewünschte Bremsverhalten kann beim beschriebenen Bremsverfahren mittels Parameter genau definiert werden. Die minimal mögliche Bremszeit ist von der Stromtragfähigkeit des Inverters der Leistungselektronik abhängig, schnellere Bremsvorgänge sind aber einfach durch entsprechende Skalierung des Inverters auf höhere Ströme möglich.

In einer besonders bevorzugten Ausgestaltung kommt im Bremsmodus ein Regler zum Einsatz, dessen Regeleingangsgröße eine Regelabweichung der Zwischenkreisspannung und/oder dessen Regelausgangsgröße die Führungsgröße ist.

In einer weiteren besonders bevorzugten Ausgestaltung ist vorgesehen, dass der bürstenlose Gleichstrommotor mittels Vektorregelung angesteuert wird und die Führungsgröße einen Stromraumzeigerwinkel repräsentiert. In einer anderen besonders bevorzugten Ausgestaltung ist vorgesehen, dass der bürstenlose Gleichstrommotor mittels Blockkommutierung angesteuert wird und die Führungsgröße einen Kommutierungswinkel repräsentiert.

Es hat sich als vorteilhaft herausgestellt, wenn die Motorstromamplitude im Bremsmodus bis zu einer unteren Bremsdrehzahlschwelle, die größer als null ist, konstant ist. Die untere Bremsdrehzahlschwelle kann beispielsweise bei 100 U/min liegen. Die Motorstromamplitude im Bremsmodus kann vorteilhafterweise einer Stromtragfähigkeit eines dem Gleichstrommotor zugeordneten Inverters entsprechen.

In einer weiteren besonders bevorzugten Ausgestaltung erfolgt die Ansteuerung des Gleichstrommotors im Bremsmodus mit der Führungsgröße derart, dass eine beim Bremsen des Gleichstrommotors in den Zwischenkreis rückgespeiste Generatorleistung gleich einer im Gleichstrommotor umgesetzten ohmschen Verlustleistung ist.

Es hat sich als vorteilhaft herausgestellt, wenn im Rahmen des Verfahrens ein Umschaltblock zum Umschalten zwischen Arbeitsmodus und Bremsmodus verwendet wird. In einer weiteren besonders bevorzugten Ausgestaltung wird die Zwischenkreisspannung auf Basis der in den Statorwicklungen des bürstenlosen Gleichstrommotors induzierten Spannungen, die durch die gegenelektromotorische Kraft bewirkt werden, ermittelt. Die Zwischenkreisspannung kann auch direkt gemessen werden.

Es hat sich als vorteilhaft herausgestellt, wenn der bürstenlose Gleichstrommotor im Bremsmodus vollständig, d.h. bis auf Drehzahl 0, abgebremst wird.

Die Aufgabe wird ebenfalls gelöst durch eine Antriebseinheit für eine Werkzeugmaschine, wobei die Antriebseinheit einen bürstenlosen Gleichstrommotor und einen dem Gleichstrommotor vorgeschalteten Zwischenkreis aufweist, wobei die Antriebseinheit ausgebildet ist den Gleichstrommotor in einem Arbeitsmodus durch einen Drehzahlregler anzusteuern und mit einer Nenndrehzahl betreiben zu können, und die Antriebseinheit ausgebildet ist, den Gleichstrommotor in einem Bremsmodus betreiben zu können, in welchem der Gleichstrommotor auf eine Bremsdrehzahl, die geringer als die Nenndrehzahl ist, abgebremst wird. Erfindungsgemäß ist die Antriebseinheit ausgebildet, den Gleichstrommotor im Bremsmodus auf Basis einer Motorstromamplitude und einer Führungsgröße, die von einer Zwischenkreisspannung des Zwischenkreises abhängig ist, anzusteuern. Es hat sich als vorteilhaft herausgestellt, wenn im Bremsmodus ein Regler zum Einsatz kommt, dessen Regeleingangsgröße eine Regelabweichung der Zwischenkreisspannung und/oder dessen Regelausgangsgröße die Führungsgröße ist.

Die Antriebseinheit ist vorzugsweise Teil einer Werkzeugmaschine, insbesondere eine Handwerkzeugmaschine.

Weitere Vorteile ergeben sich aus der folgenden Figurenbeschreibung. In den Figuren sind besonders bevorzugte Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigt:
- Fig. 1: ein Blockdiagramm zur feldorientierten Regelung eines BLDC-Motors;
- Fig. 2: Motorkennlinien eines BLDC-Motors im rotorfesten d/q-Koordinatensystem;
- Fig. 3: einen zeitlichen Verlauf des Stromraumzeigerwinkels im Verfahren nach Fig.1; und
- Fig. 4: ein Blockdiagramm zur blockkommutierten Regelung eines BLDC-Motors.

### Ausführungsbeispiel:

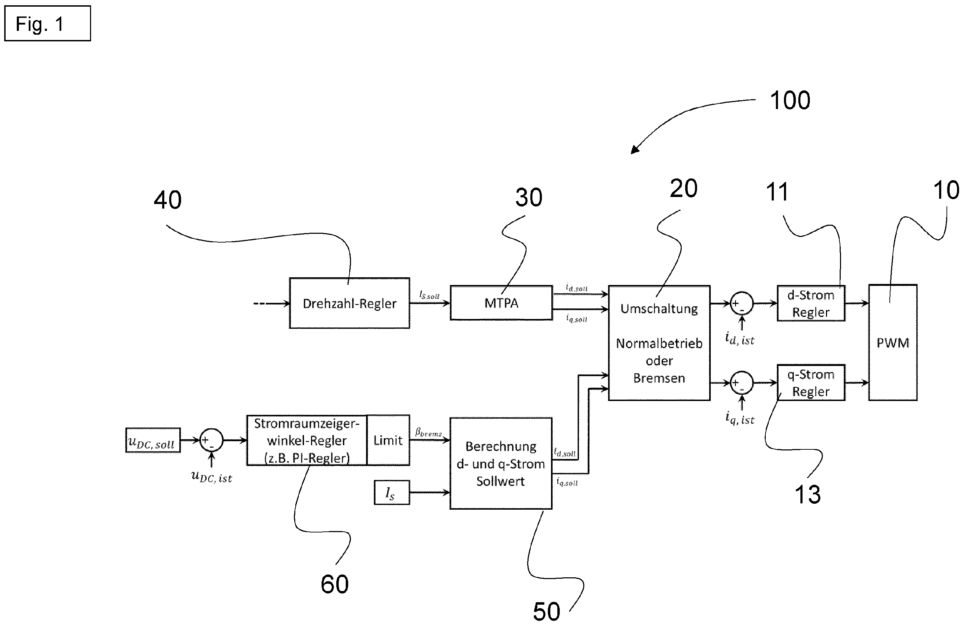

Im Folgenden wird ein bevorzugtes Ausführungsbeispiel des Verfahrens anhand einer feldorientierten Motorregelung mit rotorfesten d/q-Koordinatensystem (Park-Transformation) beschrieben. Dazu zeigt Fig. 1 ein Blockdiagramm 100 mit dem eine hier nicht dargestellte Antriebseinheit, die einen bürstenlosen Gleichstrommotor (BLDC-Motor) und einen dem BLDC-Motor vorgeschalteten Zwischenkreis aufweist, angesteuert werden kann.

Das Blockdiagramm 100 weist einen PWM-Block 10 zu pulsweitenmodulierten Ansteuerung des BLDC-Motors auf. Eingangsgrößen für den PWM-Block 10 liefern ein d-Stromregler 11 und ein q-Stromregler 13. Dem d-Stromregler 11 und dem q-Stromregler 13 vorgeschaltet ist ein gemeinsamer Umschaltblock 20 zum Umschalten zwischen einem Arbeitsmodus und einem Bremsmodus des Verfahrens.

Dem Umschaltblock 20 ist in einem "oberen" Pfad ein MTPA (Maximum Torque per Ampere) - Block 30 vorgeschaltet, der einen d-Sollstrom und einen q-Sollstrom ausgibt. Der MTPA-Block 30 erhält seinen Sollstrom wiederum von einem Drehzahlregler 40. Dieser Pfad repräsentiert den Arbeitsmodus in dem der BLDC-Motor durch Drehzahlregler 40 angesteuert und mit einer Nenndrehzahl betrieben wird. Die Nenndrehzahl kann beispielsweise durch einen Bedienknopf einer Werkzeugmaschine vorgegeben sein.

Das Blockdiagramm 100 weist weiterhin einen "unteren" Pfad auf, durch welche eine bevorzugte Variante des Bremsmodus repräsentiert ist. Im Bremsmodus wird der BLDC-Motor auf eine Bremsdrehzahl, die geringer als die Nenndrehzahl ist, abgebremst. In diesem Pfad ist dem Umschaltblock 20 ein Berechnungsblock 40 vorgeschaltet, der der einen d-Sollstrom und einen q-Sollstrom an den Umschaltblock 20 ausgibt.

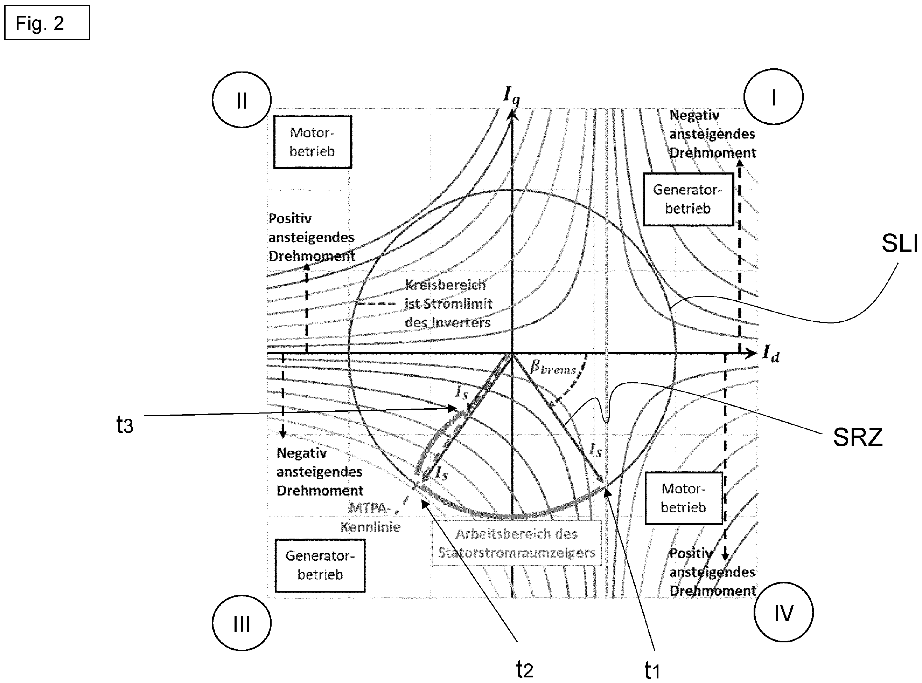

Der Berechnungsblock 50 hat als Eingangsgrößen eine Motorstromamplitude I_{S} (vgl. Fig. 2 Betrag des Statorstromraumzeigers SRZ) und eine Führungsgröße β_{brems}, welche die Verschiebung des Statorstromraumzeigers relativ zur d-Achse angibt (vgl. Fig. 2). Die Führungsgröße β_{brems} ist Regelausgangsgröße eines Stromraumzeigerwinkelreglers 60. Die Führungsgröße β_{brems} kann in einem Limiter des Stromraumzeigerwinkelreglers 60 nach unten und/oder oben begrenzt sein. Regeleingangsgröße des Stromraumzeigerwinkelreglers 60, der beispielhaft als Pl-Regler ausgebildet ist, ist eine Regelabweichung zwischen vorgegebenen Soll-Zwischenkreisspannung U_{DC,soll} und einer Ist-Zwischenkreisspannung U_{DC,ist} des dem BLDC-Motor vorgeschalteten Zwischenkreises (hier nicht dargestellt). Somit ist die Führungsgröße β_{brems} von einer Zwischenkreisspannung des Zwischenkreises geregelt abhängig. Die Motorstromamplitude I_{S} als Eingangsgröße für den Berechnungsblock 50 ist im vorliegend dargestellten Ausführungsbeispiel im Bremsmodus konstant und entspricht beispielhaft einer Stromtragfähigkeit eines dem BLDC-Motor zugeordneten Inverters.

Der bereits erwähnte Umschaltblock 20 legt also fest, ob der d-Stromregler 11 und der q-Stromregler 13 ihre Sollwerte vom Drehzahlregler 40 mit MTPA-Block 30 bekommen oder die Sollwerte durch das im "unteren" Pfad repräsentierte Bremsverfahren bereitgestellt werden. Eine Umschaltanforderungssignal für den Umschaltblock 20 kann beispielsweise durch ein "Loslassen" eines Bedienknopfs einer Werkzeugmaschine ausgelöst werden.

Zur weiteren Erläuterung des Verfahrens zeigt Fig. 2 Motorkennlinien eines beispielhaften BLDC-Motors im rotorfesten d/q-Koordinatensystem mit vier Quadranten I bis IV. (Der für die Transformation erforderliche Rotorwinkel kann beispielsweise durch Hallsensoren oder durch Auswertung der EMK Kräfte an den Statorwicklungen ermittelt werden.) Im ersten Quadranten I sind der d-Strom und der q-Strom positiv. Im dritten Quadranten III sind der d-Strom und der q-Strom negativ. Im zweiten Quadranten II ist der d-Strom negativ und der q-Strom positiv. Im vierten Quadranten IV ist der d-Strom positiv und der q-Strom negativ.

Der Statorstromraumzeiger SRZ weist als Betrag die Motorstromamplitude I_{S} auf. Der Stromraumzeigerwinkel β_{brems} gibt die Verschiebung des Statorstromraumzeigers relativ zur d-Achse an. Der Stromraumzeigerwinkel β_{brems} entspricht der Führungsgröße β_{brems} in Fig. 1. Der Stromraumzeigerwinkel *β_{brems}* wird durch einen Regler, beispielsweise einen PI-Regler berechnet, dessen Regeleingangsgröße die Zwischenkreisspannung *u_{DC}* ist, wie in Fig. 1 dargestellt.

Wie bereits erwähnt, liegt der Erfindung das Konzept zugrunde, die Bremsenergie als ohmsche Verluste im Motor selbst umzusetzen. Dazu sind die ohmschen Verluste im BLDC-Motor (*P_{V}* = *R* · *I*²) vorteilhafterweise im Gleichgewicht mit der beim Bremsvorgang vom BLDC-Motor generatorisch rückgespeisten Leistung (*P_{M}* = *M_{brems}* · *ω_{mech}*) um ein unkontrolliertes Ansteigen der Zwischenkreisspannung zu vermeiden. Das Bremsmoment des Motors *M_{brems}* kann bei konstant bleibender Motorstromamplitude I_{S} durch Ändern des Stromraumzeigerwinkels β_{brems} eingestellt werden. Die Motorstromamplitude I_{S} wird beim Bremsmodus so gewählt, dass Strommessbereiche und die Stromtragfähigkeit des Inverters nicht überschritten werden. Das Stromlimit SLI des Inverters ist in Fig. 2 als Kreis dargestellt. Vorzugsweise wird die Motorstromamplitude I_{S} konstant gehalten, um den Inverter bestmöglich auszunutzen und die kürzeste Bremszeit zu erreichen.

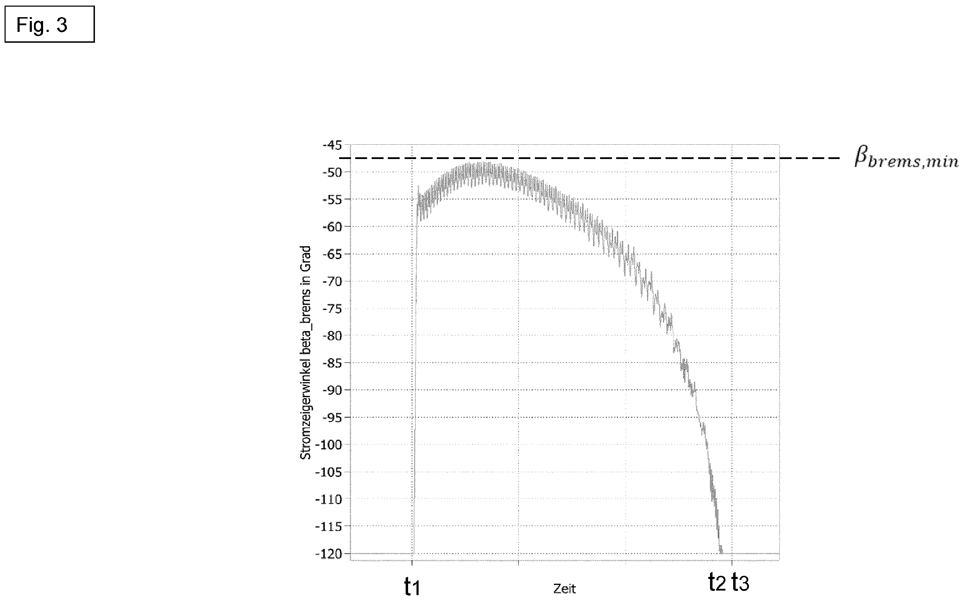

Ein Winkel *β_{brems}* = 0 entspricht einem Statorstromraumzeiger, welcher auf der positiven d-Achse liegt. Mit größer werdendem Stromraumzeigerwinkel *β_{brems}* ergibt sich ein negativer q-Stromanteil bei gleichzeitig kleiner werdendem positiven d-Strom. Zu beachten ist, dass der Stromraumzeigerwinkel *β_{brems}* einen minimalen Wert nicht unterschreiten soll, da dort der Generator-Bremsbetrieb in einen Motorbetrieb übergehen würde. Diese Grenze ist vom verwendeten BLDC-Motor abhängig. Die Stellgröße des Stromreglers ist daher auf einen minimal zulässigen Wert *β_{brems,min}* begrenzt, der beispielhaft etwa 47° beträgt (vgl. Fig.3) Bei *β_{brems}* = 90° wird schließlich der Quadrant gewechselt bis sich bei negativem d- und q-Strom der MTPA (Maximum Torque per Ampere) Arbeitspunkt erreicht wird.

In Fig. 2 ist der Zeitpunkt beim Übergang vom Arbeitsmodus zum Bremsmodus mit t₁ bezeichnet. Der Stromraumzeigerwinkel *β_{brems}* beträgt beispielhaft etwa 57° (vgl. Fig.3). Im Zuge des Bremsvorgangs bewegt sich der Stromraumzeigerwinkel *β_{brems}* in seinem Arbeitsbereich in Richtung größerer Winkel bis zu einem Zeitpunkt t₂ mit geringer Bremsdrehzahl. Der Stromraumzeigerwinkel *β_{brems}* beträgt beispielhaft nun etwa 117°. Bei solch einer geringen Bremsdrehzahl können die ohmschen Verluste die generatorisch erzeugte Leistung übersteigen, sodass die Differenz durch die Spannungsquelle gedeckt werden müsste. Wenn keine Leistung der Spannungsquelle entnommen werden soll, so kann die Motorstromamplitude I_{S} des Statorstromraumzeigers SRZ entlang der MTPA-Kennlinie optional verkürzt werden. Im Zeitpunkt t₃ befindet sich der BLDC-Motor unmittelbar vor seinem Stillstand. Ein typischer Bremsvorgang kann beispielsweise den in Fig. 3 gezeigten zeitlichen Verlauf des Stromraumzeigerwinkel *β_{brems}* besitzen. Im Zuge des Bremsvorgangs reduziert sich die Kreisfrequenz des BLDC-Motors und dementsprechend die Kreisfrequenz des rotorfesten d/q-Koordinatensystems, in welchem die Ansteuerung des BLDC-Motors mittels des Statorstromraumzeigers SRZ erfolgt.

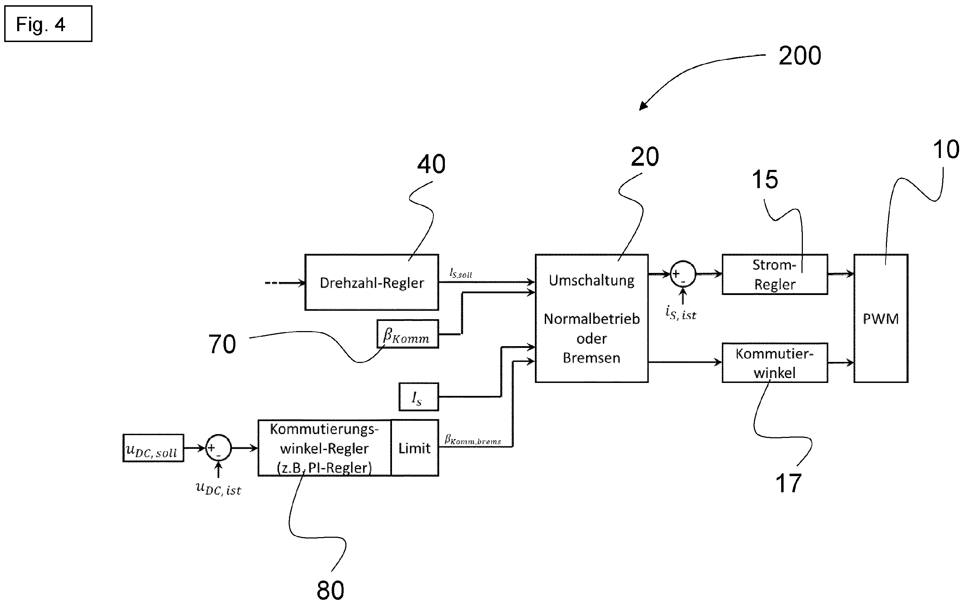

Fig. 4 zeigt ein anderes Ausführungsbeispiel des Verfahrens anhand einer Blockkommutierung. Dazu zeigt Fig. 4 ein Blockdiagramm 200 mit dem eine hier nicht dargestellte Antriebseinheit, die einen bürstenlosen Gleichstrommotor (BLDC-Motor) und einen dem BLDC-Motor vorgeschalteten Zwischenkreis aufweist, angesteuert werden kann.

Das Blockdiagramm 200 weist einen PWM-Block 10 zu pulsweitenmodulierten Ansteuerung des BLDC-Motors auf. Eingangsgrößen für den PWM-Block 10 liefern ein Stromregler 15 und ein Winkelvorgabeblock 17. Dem Stromregler 15 und dem Winkelvorgabeblock 17 vorgeschaltet ist ein gemeinsamer Umschaltblock 20 zum Umschalten zwischen einem Arbeitsmodus und einem Bremsmodus des Verfahrens.

Dem Umschaltblock 20 ist in einem "oberen" Pfad ein Drehzahlregler 40 und ein Konstantwinkelblock 70 zur Ausgabe eines konstanten Kommutierungswinkel vorgeschaltet.

Dieser Pfad repräsentiert den Arbeitsmodus in dem der BLDC-Motor durch Drehzahlregler 40 angesteuert und mit einer Nenndrehzahl betrieben wird. Die Nenndrehzahl kann beispielsweise durch einen Bedienknopf einer Werkzeugmaschine vorgegeben sein.

Das Blockdiagramm 200 weist weiterhin einen "unteren" Pfad auf, durch welche eine bevorzugte Variante des Bremsmodus repräsentiert ist. Im Bremsmodus wird der BLDC-Motor auf eine Bremsdrehzahl, die geringer als die Nenndrehzahl ist, abgebremst. In diesem Pfad ist dem Umschaltblock 20 ein Kommutierungswinkelregler 80, der beispielhaft als PI-Regler ausgebildet ist, vorgeschaltet. Der Kommutierungswinkelregler 80 gibt eine Führungsgröße β_{Kommbrems} an den Umschaltblock 20 aus, wobei eine Regeleingangsgröße des Kommutierungswinkelreglers 80 (wie beim Ausführungsbeispiel der Fig.1) eine Regelabweichung zwischen vorgegebenen Soll-Zwischenkreisspannung U_{DC,soll} und einer Ist-Zwischenkreisspannung U_{DC,ist} des dem BLDC-Motor vorgeschalteten Zwischenkreises (hier nicht dargestellt) ist. Somit ist die Führungsgröße β_{Kommbrems} von einer Zwischenkreisspannung des Zwischenkreises geregelt abhängig. Die Motorstromamplitude I_{S} als Eingangsgröße für den Umschaltblock 20 ist im vorliegend dargestellten Ausführungsbeispiel im Bremsmodus konstant und entspricht beispielhaft einer Stromtragfähigkeit eines dem BLDC-Motor zugeordneten Inverters. Der Umschaltblock 20 legt hier fest, ob eine Stromregleramplitude mit konstanten Kommutierwinkeln vom Drehzahlregler bereitgestellt wird (Arbeitsmodus) oder konstante Stromreglersollwert (Motorstromamplitude) mit variablen Kommutierwinkeln (Bremsmodus) verwendet wird.

### Bezuaszeichenliste

- 10: PWM-Block
- 11: d-Stromregler
- 13: q-Stromregler
- 15: Stromregler (Blockkommutierung)
- 17: Winkelvorgabeblock (Blockkommutierung)
- 20: Umschaltblock
- 30: MTPA-Block
- 40: Drehzahlregler
- 50: Berechnungsblock
- 60: Stromraumzeigerwinkelregler
- 70: Konstantwinkelblock
- 80: Kommutierungswinkelregler

- 100: Blockdiagramm für feldorientierte Motorregelung
- 200: Blockdiagramm für blockkommutierte Motorregelung

- β_{brems}: Führungsgröße (Vektorregelung)
- β_{Kommbrems}: Führungsgröße (Blockkommutierung)
- I_{D,} I_{q}: Motorströme im d/q-Koordinatensystem
- I_{S}: Motorstromamplitude
- U_{DC,ist}: Ist-Zwischenkreisspannung
- U_{DC,soll}: Soll-Zwischenkreisspannung

- SLI: Stromlimit des Inverters
- SRZ: Statorstromraumzeiger
- I..IV: Quadranten

## Patentansprüche

1. Verfahren zum Betreiben einer Antriebseinheit einer Werkzeugmaschine, wobei die Antriebseinheit einen bürstenlosen Gleichstrommotor und einen dem Gleichstrommotor vorgeschalteten Zwischenkreis aufweist, wobei der Gleichstrommotor in einem Arbeitsmodus durch einen Drehzahlregler angesteuert und mit einer Nenndrehzahl betrieben wird, und wobei das Verfahren einen Bremsmodus aufweist, in dem der Gleichstrommotor auf eine Bremsdrehzahl, die geringer als die Nenndrehzahl ist, abgebremst wird,
**dadurch gekennzeichnet, dass** der Gleichstrommotor im Bremsmodus auf Basis einer Motorstromamplitude und einer Führungsgröße angesteuert wird, wobei die Führungsgröße von einer Zwischenkreisspannung des Zwischenkreises abhängig ist.

2. Verfahren nach Anspruch 1,
**dadurch gekennzeichnet, dass** im Bremsmodus ein Regler zum Einsatz kommt, dessen Regeleingangsgröße eine Zwischenkreisspannung oder eine Regelabweichung der Zwischenkreisspannung ist und/oder dessen Regelausgangsgröße die Führungsgröße zur Ansteuerung des Gleichstrommotors ist.

3. Verfahren nach Anspruch 1 oder 2,
**dadurch gekennzeichnet, dass** die Motorstromamplitude im Bremsmodus bis zu einer unteren Bremsdrehzahlschwelle, die größer als null ist, konstant ist.

4. Verfahren nach Anspruch 3,
**dadurch gekennzeichnet, dass** die Motorstromamplitude im Bremsmodus der Stromtragfähigkeit eines dem Gleichstrommotor zugeordneten Inverters entspricht.

5. Verfahren nach einem der vorangehenden Ansprüche,
**dadurch gekennzeichnet, dass** die Ansteuerung des Gleichstrommotors im Bremsmodus mit der Führungsgröße derart erfolgt, dass eine beim Bremsen des Gleichstrommotors in den Zwischenkreis rückgespeiste Generatorleistung gleich einer im Gleichstrommotor umgesetzten ohmschen Verlustleistung ist.

6. Verfahren nach einem der vorangehenden Ansprüche,
**dadurch gekennzeichnet, dass** im Rahmen des Verfahrens ein Umschaltblock zum Umschalten zwischen Arbeitsmodus und Bremsmodus verwendet wird.

7. Verfahren nach einem der vorangehenden Ansprüche,
**dadurch gekennzeichnet, dass** die Zwischenkreisspannung auf Basis der in den Statorwicklungen des bürstenlosen Gleichstrommotor induzierten Spannungen, die durch die gegenelektromotorische Kraft bewirkt werden, ermittelt wird.

8. Verfahren nach einem der vorangehenden Ansprüche,
**dadurch gekennzeichnet, dass** der bürstenlose Gleichstrommotor im Bremsmodus vollständig abgebremst wird.

9. Verfahren nach einem der vorangehenden Ansprüche,
**dadurch gekennzeichnet, dass** der bürstenlose Gleichstrommotor mittels Vektorregelung angesteuert wird und die Führungsgröße einen Stromraumzeigerwinkel repräsentiert.

10. Verfahren nach einem der Ansprüche 1 bis 8,
**dadurch gekennzeichnet, dass** der bürstenlose Gleichstrommotor mittels Blockkommutierung angesteuert wird und die Führungsgröße einen Kommutierungswinkel repräsentiert.

11. Antriebseinheit für eine Werkzeugmaschine, wobei die Antriebseinheit einen bürstenlosen Gleichstrommotor und einen dem Gleichstrommotor vorgeschalteten Zwischenkreis aufweist, wobei die Antriebseinheit ausgebildet ist den Gleichstrommotor in einem Arbeitsmodus durch einen Drehzahlregler anzusteuern und mit einer Nenndrehzahl betreiben zu können, und die Antriebseinheit ausgebildet ist, den Gleichstrommotor in einem Bremsmodus zu betreiben zu können, in welchem der Gleichstrommotor auf eine Bremsdrehzahl, die geringer als die Nenndrehzahl ist, abgebremst wird,
**dadurch gekennzeichnet, dass** die Antriebseinheit ausgebildet ist den Gleichstrommotor im Bremsmodus auf Basis einer Motorstromamplitude und einer Führungsgröße, die von einer Zwischenkreisspannung des Zwischenkreises abhängig ist, anzusteuern.

12. Werkzeugmaschine, insbesondere Handwerkzeugmaschine mit einer Antriebseinheit nach Anspruch 11.
